(19) Europäisches Patentamt
European Patent Office
Office européen des brevets

(11) **EP 4 636 647 A2**

(12) **EUROPEAN PATENT APPLICATION**

(43) Date of publication:
**22.10.2025 Bulletin 2025/43**

(21) Application number: **25169820.5**

(22) Date of filing: **10.04.2025**

(51) International Patent Classification (IPC):
**G06N 3/045** (2023.01)　　**G06N 3/082** (2023.01)

(52) Cooperative Patent Classification (CPC):
**G06N 3/045; G06N 3/082**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **17.04.2024 US 202418637621**

(71) Applicant: **Microsoft Technology Licensing, LLC Redmond, WA 98052 (US)**

(72) Inventors:
• **HAKIM, Adam**
 **Redmond, 98052 (US)**
• **LOKAM, Satyanarayana Venkata**
 **Redmond, 98052 (US)**
• **REFAEL KALIM, Yehonathan**
 **Redmond, 98052 (US)**

(74) Representative: **CMS Cameron McKenna Nabarro Olswang LLP**
 **Cannon Place**
 **78 Cannon Street**
 **London EC4N 6AF (GB)**

(54) **HYBRID MACHINE LEARNING MODEL WITH LAYER DECOMPOSITION**

(57)　　The technology described herein is related to a hybrid neural network that divides operations of a neural network layer between a trusted environment and an untrusted environment. In an aspect, a first portion of nodes (or neurons) in a layer operate on a trusted device and a second portion of nodes in the layer operate on the untrusted device. The layer output is generated by combining the result produced by the nodes in the trusted and untrusted environments. The technology described herein decomposes a pretrained neural network by identifying a small amount (relative to total nodes in the layer) of nodes in a layer that provide the largest contribution to an accurate model result. The technology described herein may use a matrix decomposition technique to identify components (e.g., singular values and singular vectors) that are able to reproduce the original matrix, but vary in the importance of information they hold.

*FIG. 2*

**EP 4 636 647 A2**

**Description**

BACKGROUND

Neural networks are a key component of artificial intelligence and are used in a wide range of applications, from image recognition to natural language processing. Large neural networks (NNs), such as large language models (LLMs) have been widely adopted, both in academia and in the industry. A LLM is a type of artificial intelligence model that has been trained on a vast amount of text data. It may learn to predict the next word in a sentence by understanding the context provided by the preceding words. This ability allows it to generate human-like text, given some initial input. LLMs, such as a Generative Pre-training Transformer (GPT) model, may have billions of parameters that are fine-tuned during training, enabling them to capture complex patterns in language use. They can answer questions, write essays, summarize texts, translate languages, and even generate code. However, their increasing model complexity, manifested through billions to trillions of parameters, has presented significant challenges for their deployment and execution.

One major challenge stems from the growing interest to deploy NNs on edge computing devices. When deployed in a server, the NN may be secured from theft. The learned parameters of the NN may not be easily inspected or analyzed by users. In contrast, a NN deployed to a client may be inspected or copied. Deploying a NN to a less trusted and less secure environment presents critical security risks for this valuable intellectual property to be stolen.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

The technology described herein is related to a hybrid neural network that divides operations of a neural network layer between a trusted environment and an untrusted environment. In one aspect, the trusted environment is a server or data center (e.g., cloud). The untrusted environment may be an edge device, such as a user device. In an aspect, a first portion of nodes (or neurons) in a layer operate on a trusted device and a second portion of nodes in the layer operate on the untrusted device. The layer output is generated by combining the result produced by the nodes in the trusted and untrusted environments.

The technology described herein decomposes a pretrained neural network by identifying a small amount (relative to total nodes in the layer) of nodes in a layer that provide the largest contribution to an accurate model result. These are designated as significant nodes. The small amount of significant nodes are extracted from the layer to operate in the trusted environment (e.g., server). The remaining nodes in the layer are deployed to untrusted environment (e.g., client). This results in a partial client neural network and a partial server neural network. Without the nodes in the server neural network, the performance of the partial client neural network is significantly degraded compared to the performance of the original pretrained neural network.

The technology described herein may use a matrix decomposition technique to identify components (e.g., singular values and singular vectors) that are able to reproduce the original matrix, but vary in the importance of information they hold. A few, most critical components could operate securely in the server, while the majority of components could operate on the client. The remaining components on the client would, therefore, hold a minimal amount of valuable information, and would yield a model with poor performance if used without the components on the server. So, an attacker of the client device would be able to obtain only an ineffective version of the model. Moreover, the components on the server may remain minimal, to minimize the computation on the server. At inference time, the user's query is calculated against the components on the client device, while also uploaded to the server to be calculated against the server components. The results of the client and server are combined to produce a final layer result and/or model result.

In aspects, some layers of a neural network may be deployed entirely on the client-side or entirely on the server-side. In addition, the number of nodes in a given layer that are deployed in the trusted environment may vary from layer to layer.

BRIEF DESCRIPTION OF THE DRAWINGS

The technology described herein is illustrated by way of example and not limitation in the accompanying figures in which like reference numerals indicate similar elements and in which:

FIG. 1 is a diagram of a computing system suitable for implementations of the technology described herein;
FIG. 2 is a block diagram of an example operating environment for a hybrid machine-learning model, in accordance with an aspect of the technology described herein;
FIG. 3 is a block diagram illustrating layer decomposition, in accordance with an aspect of the technology described herein;

FIGs. 4A and 4B are block diagrams illustrating server and client operations in a hybrid neural network, in accordance with an aspect of the technology described herein;

FIG. 5 is a flow diagram showing a method of using a hybrid neural network, in accordance with an aspect of the technology described herein;

FIG. 6 is a flow diagram showing a method of using a hybrid neural network, in accordance with an aspect of the technology described herein;

FIG. 7 is a flow diagram showing a method of using a hybrid neural network, in accordance with an aspect of the technology described herein; and

FIG. 8 is a block diagram showing a computing device suitable for implementations of the technology described herein.

DETAILED DESCRIPTION

The various technologies described herein are set forth with sufficient specificity to meet statutory requirements. However, the description itself is not intended to limit the scope of this patent. Rather, the inventors have contemplated that the claimed subject matter might also be embodied in other ways, to include different steps or combinations of steps similar to the ones described in this document, in conjunction with other present or future technologies. Moreover, although the terms "step" and/or "block" may be used herein to connote different elements of methods employed, the terms should not be interpreted as implying any particular order among or between various steps herein disclosed unless and except when the order of individual steps is explicitly described.

The technology described herein is related to a hybrid neural network that divides operations of a neural network layer between a trusted environment and an untrusted environment. In one aspect, the trusted environment is a server or data center (e.g., cloud). The untrusted environment may be an edge device, such as a user device. In an aspect, a first portion of nodes (or neurons) in a layer operate on a trusted device and a second portion of nodes in the layer operate on the untrusted device. The layer output is generated by combining the result produced by the nodes in the trusted and untrusted environments.

It should be noted that the phrase trusted and untrusted are not absolute judgements about the trustworthiness of environments. In general, the trusted environment may be controlled by the entity that is deploying the neural network. The entity's control over the computing environment causes it to be trusted by the entity. The security of the untrusted environment may be outside of the control of the entity, making it untrusted. The untrusted environment may, in fact, be secure, potentially even more secure than the trusted environment. In many of the examples used herein, the trusted environment may be described as a cloud environment or server environment. The untrusted environment may be described as an edge environment, user device, or client environment. These designations are used for the sake of example.

The technology described herein decomposes a pretrained neural network by identifying a small amount (relative to total nodes in the layer) of nodes in a layer that provide the largest contribution to an accurate model result. These are designated as significant nodes. The small amount of significant nodes are extracted from the layer to operate in the trusted environment (e.g., server). The remaining nodes in the layer are deployed to untrusted environment (e.g., client). This results in a partial client neural network and a partial server neural network. Without the nodes in the server neural network, the performance of the partial client neural network is significantly degraded compared to the performance of the original pretrained neural network.

The technology described herein may use a matrix decomposition technique to identify components (e.g., singular values and singular vectors) that are able to reproduce the original matrix, but vary in the importance of information they hold. A few, most critical components could operate securely in the server, while the majority of components could operate on the client. The remaining components on the client would, therefore, hold a minimal amount of valuable information, and would yield a model with poor performance if used without the components on the server. So, an attacker of the client device would be able to obtain only an ineffective version of the model. Moreover, the components on the server may remain minimal, to minimize the computation on the server. At inference time, the user's query is calculated against the components on the client device, while also uploaded to the server to be calculated against the server components. The results of the client and server are combined to produce a final layer result and/or model result.

Operating some neural networks, such as large language models, is resource intensive. The resources used include processing capacity, computer memory, and electricity. The use of client resources to run the neural networks may reduce the need build out larger data centers. However, deploying a trained neural network to the client may essentially give away the valuable neural network. It is desirable to utilize client resources to operate a neural network without giving away the trained neural network. The technology described herein utilizes a hybrid deployment with some neural network functions performed on a server and some on the client.

A neural network is a computational model that consists of layers of nodes, or "neurons," each receiving input, processing it, and passing the output to the next layer. Neural networks can include different types of layers. Example layer types include convolutional, activation, pooling, fully connected, batch normalization, dropout, recurrent layers, feedforward layers, embedding layers, and attention layers.

In aspects, some layers of a neural network may be deployed entirely on the client-side or entirely on the server-side. In addition, the number of nodes in a given layer that are deployed in the trusted environment may vary from layer to layer. For example, in a first layer 5 nodes out of 1000 may be deployed to the trusted environment. In a second layer, 10 nodes of 1000 may be deployed to the trusted environment. It is been discovered that removing nodes from different types of layers causes different results. For example, in several GPT models, removing nodes from feedforward and fully connected layers causes more degradation then removing the same amount of nodes from an attention layer. In in this context, it may be desirable to remove nodes from only feedforward and fully connected layers, while leaving the attention layers fully intact in the untrusted environment.

As every model may be different and results may vary from architecture to architecture, testing the degradation caused by removing nodes from the model may be performed to select the amount of nodes removed from each layer. In aspects, a desire degradation target can be specified, such as 50%, 70%, or 90% degradation. Degradation may be measured by model accuracy or some other measure, by comparing the result generated by the degraded model with a ground truth result associated with the input. In testing of various models using GPT architectures, it has been found that removing less than 5% of nodes from a layer causes significant performance degradation. Thus, in aspects, the technology described herein may deploy 5% or less of nodes from the model in the trusted environment and 95% or more of nodes from the model in an untrusted environment. In another aspect, the technology described herein may deploy 10% or less of nodes from the model in the trusted environment and 90% or more of nodes from the model in an untrusted environment. In another aspect, the technology described herein may deploy 20% or less of nodes from the model in the trusted environment and 80% or more of nodes from the model in an untrusted environment.

The technologies herein are described using key terms wherein definitions are provided. However, the definitions of key terms are not intended to limit the scope of the technologies described herein.

A "language model" is a set of statistical or probabilistic functions that performs Natural Language Processing (NLP) in order to understand, learn, and/or generate human natural language content. A language model is one example of a neural network. For example, a language model can be a tool that determines the probability of a given sequence of words occurring in a sentence (e.g., via NSP or MLM) or natural language sequence. Simply put, it can be a tool which is trained to predict the next word in a sentence. A language model is called a large language model ("LLM") when it is trained on enormous amount of data. Some examples of LLMs are GOOGLE's BERT and OpenAI's GPT-2 and GPT-3. GPT-3, and GPT-4, which has over 175 billion parameters trained on over 570 gigabytes of text. These models have capabilities ranging from writing an essay to generating complex computer codes - all with limited to no supervision. Accordingly, an LLM is a deep neural network that is very large (billions to hundreds to trillions of parameters) and understands, processes, and produces human natural language by being trained on massive amounts of text. These models can predict future words in a sentence letting them generate sentences similar to how humans talk and write. In some embodiments, the LLM is pre-trained (e.g., via NSP and MLM on a natural language corpus to learn English) without having been fine-tuned, but rather uses prompt engineering/prompting/prompt learning using one-shot or few-shot examples.

A language model may perform various tasks, such as machine translation, natural language summary, question answering, and sentiment analysis. A "natural language summary" as described herein refers to text summarization. Text summarization (or automatic summarization or NLP text summarization) is the process of breaking down text (e.g., several paragraphs) into smaller text (e.g., one sentence or paragraph). In other words, text summarization is the process of distilling the most important information from a source (or sources) to produce an abridged version for a particular user (or users) and task (or tasks). This method extracts vital information while also preserving the meaning of the text. This reduces the time required for grasping lengthy pieces such as articles without losing vital information, for example. For example, using extraction summarization, some embodiments, using NLP, detect key chunks of natural language text, extracting or cutting them out, then stitching them back together to create a shortened form of the dataset. For instance, a sentence in the dataset may read, "I'm heading to the supermarket by taking Ray road. Hopefully there will not be as much traffic at that time. I'm going to buy fruit." Extraction summarization may work by reducing the characters to "I'm heading to the supermarket. I'm going to buy fruit." In another example, abstractive summarization works by generating new sentences (or other natural language characters) from the original dataset. For example, using the original dataset described above, the summarization may be, "I'm heading to the store to buy fruit," where "store" is a new word input into the new sentence (e.g., based on NLP semantic analysis and/or Named Entity Recognition NER and "I'm going" is removed from the original sentence. NER is an information extraction technique that identifies and classifies tokens/words or "entities" in natural language text into predefined categories. Such predefined categories may be indicated in corresponding tags or labels, which can be used in summaries. Entities can be, for example, names of people, specific organizations, specific locations, specific times, specific quantities, specific monetary price values, specific percentages, specific pages, and the like.

Having briefly described an overview of aspects of the technology described herein, an operating environment in which aspects of the technology described herein may be implemented is described below in order to provide a general context for various aspects.

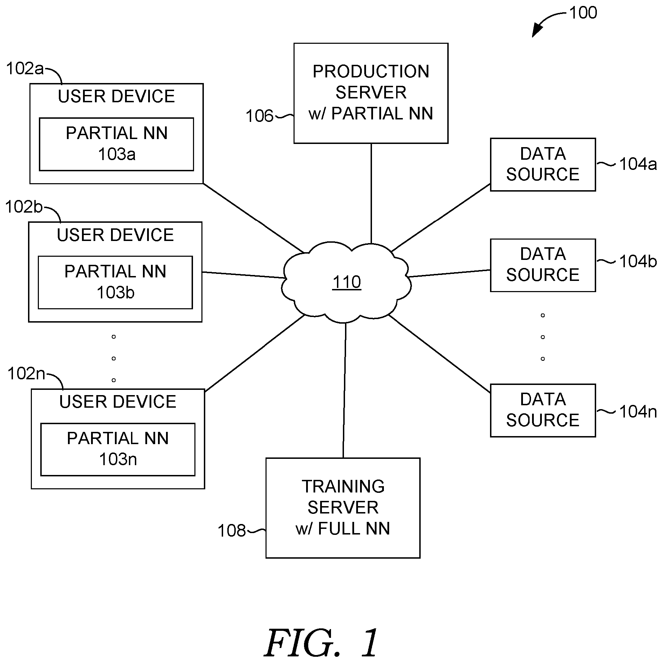

Turning now to FIG. 1, a block diagram is provided showing an example operating environment 100 in which some embodiments of the present disclosure can be employed. It should be understood that this and other arrangements described herein are set forth only as examples. Other arrangements and elements (for example, machines, interfaces, functions, orders, and groupings of functions) can be used in addition to or instead of those shown, and some elements can be omitted altogether for the sake of clarity. Further, many of the elements described herein are functional entities that are implemented as discrete or distributed components or in conjunction with other components, and in any suitable combination and location. Various functions described herein as being performed by one or more entities are carried out by hardware, firmware, and/or software. For instance, some functions are carried out by a processor executing instructions stored in memory.

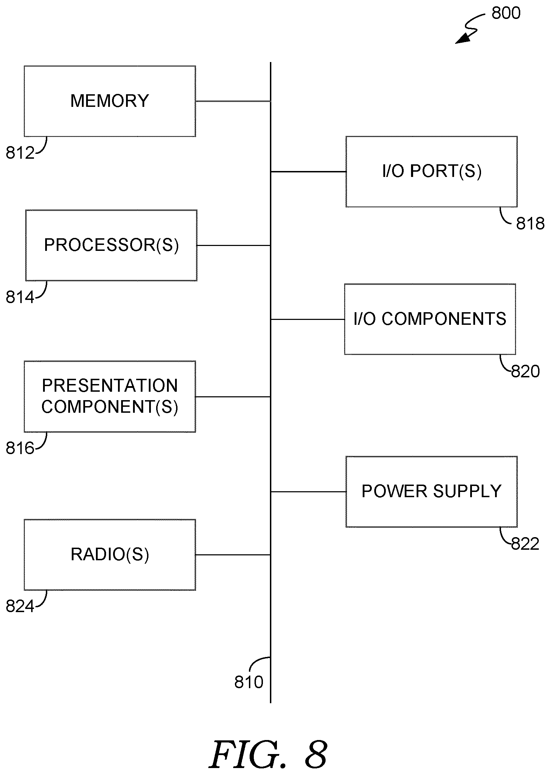

Among other components not shown, example operating environment 100 includes a number of user computing devices, such as user devices 102b through 102n; a number of data sources, such as data sources 104a and 104b through 104n; server 106; and network 110. Each of the components shown in FIG. 1 is implemented via any type of computing device, such as computing device 800 illustrated in FIG. 8, for example. In one embodiment, these components communicate with each other via network 110, which includes, without limitation, one or more local area networks (LANs) and/or wide area networks (WANs). In one example, network 110 comprises the internet, intranet, and/or a cellular network, amongst any of a variety of possible public and/or private networks.

It should be understood that any number of user devices, servers, and data sources can be employed within operating environment 100 within the scope of the present disclosure. Each may comprise a single device or multiple devices cooperating in a distributed environment, such as the distributed computing device 800 in FIG. 8. For instance, server 106 is provided via multiple devices arranged in a distributed environment that collectively provides the functionality described herein. Additionally, other components not shown may also be included within the distributed environment.

User devices 102a, 102b, through 102n can be client user devices on the client-side of operating environment 100, while server 106 can be on the server-side of operating environment 100. The user devices may be described as client devices, edge devices, and/or untrusted devices herein. Server 106 can comprise server-side software designed to work in conjunction with client-side software on user devices 102a through 102n so as to implement any combination of the features and functionalities discussed in the present disclosure. In one aspect, the server hosts a partial neural network that cooperates with partial neural networks 103a, 103b, through 103n to provide a response to an input. The partial neural networks 103a, 103b, through 103n may include a majority of the nodes in any given layer, such as 60% or more of the nodes, 80% or more of the nodes, 90% or more of the nodes, 95% or more of the nodes or 99% or more of the nodes. The partial neural networks 103a, 103b, through 103n may include a majority of the nodes in entire model, such as 60% or more of the nodes, 80% or more of the nodes, 90% or more of the nodes, 95% or more of the nodes or 99% or more of the nodes. In aspects, the user devices 102a through 102n provide a user interface to the hybrid neural network environment 200. The user interface may facilitate reception of user input, such as a natural language prompt, query, and/or image. The user interface may also provide a final output generated by the combined efforts of the server-side and client-side partial neural networks. The interfaces may be generated in combination with functions provided by partial neural networks 103a, 103b, through 103n. This division of operating environment 100 is provided to illustrate one example of a suitable environment, and there is no requirement for each implementation that any combination of server 106 and user devices and 102a through 102n remain as separate entities.

In some embodiments, user devices 102a through 102n comprise any type of computing device capable of use by a user. For example, in one embodiment, user devices 102a through 102n are the type of computing device 800 described in relation to FIG. 8. By way of example and not limitation, a user device is embodied as a personal computer (PC), a laptop computer, a mobile device, a smartphone, a tablet computer, a virtual-reality (VR) or augmented-reality (AR) device or headset, a handheld communication device, an embedded system controller, a consumer electronic device, a workstation, any other suitable computer device, or any combination of these delineated devices.

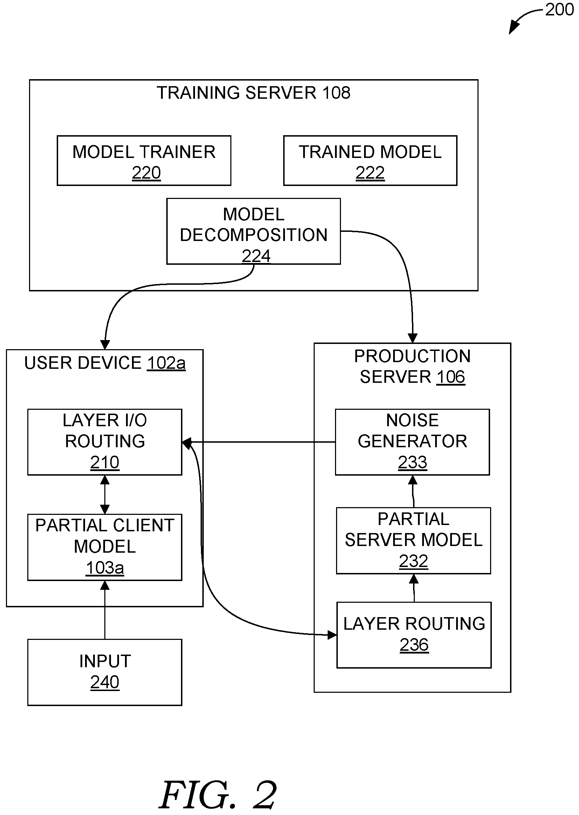

In some embodiments, data sources 104a and 104b through 104n comprise data sources and/or data systems, which are configured to make data available to any of the various constituents of operating environment 100 or environment 200 described in connection to FIG. 2. The data sources may include training data for the training server 108 or model trainer and/or input and output from a trained model. The training server 108 may train a neural network before it is deployed to a client device and server. Certain data sources 104a and 104b through 104n are discrete from user devices 102a through 102n and server 106 or are incorporated and/or integrated into at least one of those components. In one embodiment, one or more of data sources 104a and 104b through 104n comprise one or more sensors, which are integrated into or associated with one or more of the user device(s) 102a through 102n or server 106. For example, the data sources could include a web camera used to interact with a virtual environment.

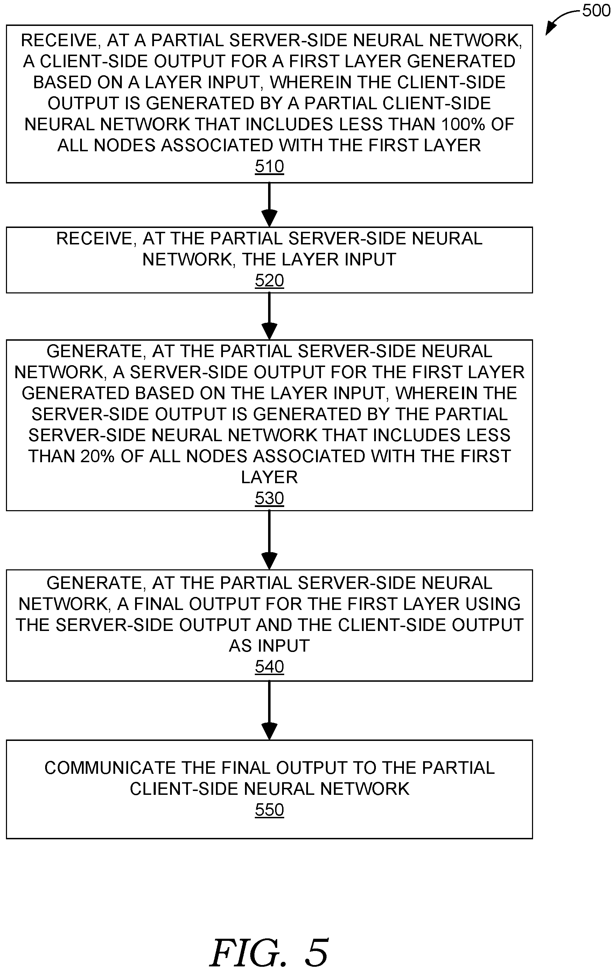

Operating environment 100 can be utilized to implement one or more of the components of environment 200, as described in FIG. 2. Operating environment 100 can also be utilized for implementing aspects of methods 500, 600, and 700 in FIGS. 5, 6, and 7, respectively.

Referring now to FIG. 2 with FIG. 1, a block diagram is provided showing aspects of an example hybrid neural network environment suitable for implementing some embodiments of the disclosure and designated generally as environment 200. The environment 200 includes the training server 108, the user device 102a, and the production server 106. Working together, the partial client neural network 103a and partial server neural network 232 may generate a response to input 240.

The environment 200 represents only one example of a suitable computing system architecture. Other arrangements and elements can be used in addition to or instead of those shown, and some elements may be omitted altogether for the sake of clarity. Further, as with operating environment 100, many of the elements described herein are functional entities that may be implemented as discrete or distributed components or in conjunction with other components, and in any suitable combination and location. These components may be embodied as a set of compiled computer instructions or functions, program modules, computer software services, or an arrangement of processes carried out on one or more computer systems.

In one embodiment, the functions performed by components of environment 200 are associated with training and using a face editing model. These components, functions performed by these components, and/or services carried out by these components may be implemented at appropriate abstraction layer(s) such as the operating system layer, application layer, and/or hardware layer of the computing system(s). Alternatively, or in addition, the functionality of these components, and/or the embodiments described herein can be performed, at least in part, by one or more hardware logic components. For example, and without limitation, illustrative types of hardware logic components that can be used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs). Additionally, although functionality is described herein with regards to specific components shown in example environment 200, it is contemplated that in some embodiments functionality of these components can be shared or distributed across other components and/or computer systems.

By way of overview, the training server 108 generates a trained model 222. The nodes of the model that are to be deployed to the user device 102a are first identified by the model decomposition component 224. Once decomposition occurs and the least significant nodes identified, a partial client neural network 103a is constructed from the least significant nodes and communicated to the user device 102a for subsequent use. A partial server neural network formed with the most significant nodes, may be deployed to a production server 106. The significant nodes are only deployed to the production server and are not also deployed to the user device.

Once deployed, the hybrid model may process an input 240 to generate a result. In one aspect, the input 240 is communicated from the user device 102a to the production server 106 for processing. Simultaneously, the input 240 may be processed by a first partial layer on the user device 102a and a corresponding first partial layer on the production server 106. The layer input/output routing component 210 may route the output generated by the partial client neural network to the production server 106. The layer routing component 236 may receive the output and route it to the correct portion of the partial server neural network for processing. The outputs from the partial client neural network 103a and partial server neural network 232 may be combined by the partial server neural network 232 to form a final answer. The noise generator may add noise to the final answer to create a final noisy answer. The final noisy answer may be communicated to the layer input/output routing component 210 for processing by the next layer of the partial client neural network 103a.

The model trainer 220 of the training server 108 generates a trained model 222. For the sake of illustration, the model trainer 220 may train a Large Language Model (e.g., a BERT model or GPT-4 model) that uses particular inputs to make particular predictions (e.g., generate answers), according to some embodiments. In some embodiments, this model represents or includes the functionality as described with respect to the trained model 222, partial client neural network 103a and/or partial server neural network 232.

First, a natural language corpus (e.g., various WIKIPEDIA English words or BooksCorpus) of the inputs are converted into tokens and then feature vectors and embedded into an input embedding to derive meaning of individual natural language words (for example, English semantics) during pre-training. In some embodiments, to understand English language, corpus documents, such as text books, periodicals, blogs, social media feeds, and the like are ingested by the language model.

In some embodiments, each word or character in the input(s) is mapped into the input embedding in parallel or at the same time, unlike existing long short-term memory (LSTM) models, for example. The input embedding maps a word to a feature vector representing the word. But the same word (for example, "apple") in different sentences may have different meanings (for example, phone v. fruit). This is why a positional encoder can be implemented. A positional encoder is a vector that gives context to words (for example, "apple") based on a position of a word in a sentence. For example, with respect to a message "I just sent the document," because "I" is at the beginning of a sentence, embodiments can indicate a position in an embedding closer to "just," as opposed to "document." Some embodiments use a sign/cosine function to generate the positional encoder vector as follows:

$$[PE]\_((pos,2i))=\sin\ (pos/[10000]^\wedge([2i/d]\_model)\dashv)$$

$$[PE]\_((pos,2i+1))=\cos\ (pos/[10000]^\wedge([2i/d]\_model))\dashv$$

After passing the input(s) through the input embedding and applying the positional encoder, the output is a word embedding feature vector, which encodes positional information or context based on the positional encoder. These word embedding feature vectors are then passed to the encoder and/or decoder block(s), where it goes through a multi-head attention layer and a feedforward layer.

The multi-head attention layer is generally responsible for focusing or processing certain parts of the feature vectors representing specific portions of the input(s) by generating attention vectors. For example, in Question Answering systems, the multi-head attention layer determines how relevant the ith word (or particular word in a sentence) is for answering the question or relevant to other words in the same or other blocks, the output of which is an attention vector. For every word, some embodiments generate an attention vector, which captures contextual relationships between other words in the same sentence or other sequence of characters. For a given word, some embodiments compute a weighted average or otherwise aggregate attention vectors of other words that contain the given word (for example, other words in the same line or block) to compute a final attention vector.

In some embodiments, a single headed attention has abstract vectors Q, K, and V that extract different components of a particular word. These are used to compute the attention vectors for every word, using the following formula:

$$Z=\text{softmax }([Q.K]^\wedge T/\surd(\text{Dimension of vector Q,K or V})).V$$

For multi-headed attention, there a multiple weight matrices Wq , Wk and Wv. so there are multiple attention vectors Z for every word. However, a neural network may only expect one attention vector per word. Accordingly, another weighted matrix, Wz, is used to make sure the output is still an attention vector per word. In some embodiments, after the layers and, there is some form of normalization (for example, batch normalization and/or layer normalization) performed to smooth out the loss surface making it easier to optimize while using larger learning rates.

The LLM may include residual connection and/or normalization layers where normalization re-centers and re-scales or normalizes the data across the feature dimensions. The feedforward layer is a feed forward neural network that is applied to every one of the attention vectors outputted by the multi-head attention layer. The feedforward layer transforms the attention vectors into a form that can be processed by the next encoder block or making a prediction. For example, given that a document includes first natural language sequence "the due date is..." the encoder/decoder block(s) predicts that the next natural language sequence will be a specific date or particular words based on past documents that include language identical or similar to the first natural language sequence.

In some embodiments, the initial embedding (for example, the input embedding) is constructed from three vectors: the token embeddings, the segment or context-question embeddings, and the position embeddings. In some embodiments, the following functionality occurs in the pre-training phase. The token embeddings are the pre-trained embeddings. The segment embeddings are the sentence number (that includes the input(s)) that is encoded into a vector (for example, first sentence, second sentence, etc. assuming a top-down and right-to-left approach). The position embeddings are vectors that represent the position of a particular word in such sentence that can be produced by positional encoder. When these three embeddings are added or concatenated together, an embedding vector is generated that is used as input into the encoder/decoder block(s). The segment and position embeddings are used for temporal ordering since all of the vectors are fed into the encoder/decoder block(s) simultaneously and language models need some sort of order preserved.

In some embodiments, once pre-training is performed, the encoder/decoder block(s) performs prompt engineering (fine-tuning or prompt-tuning) and/or zero-shot learning on a variety of QA (e.g., prompt and output) data sets by converting different QA formats into a unified sequence-to-sequence format. For example, some embodiments perform the QA task by adding a new question-answering head or encoder/decoder block, just the way a masked language model head is added (in pre-training) for performing a MLM task, except that the task is a part of prompt engineering, zero-shot learning, prompt-tuning, and/or fine-tuning. This includes the encoder/decoder block(s) processing the inputs (i.e., the target datasets and the prompt instructions) in order to make the predictions and confidence scores. Prompt engineering, in some embodiments, is the process of crafting and optimizing text prompts for language models to achieve desired outputs. In other words, prompt engineering is the process of mapping prompts (e.g., an instruction/question) to the output (e.g., an answer) that it belongs to for training. For example, if a user asks a model to generate a poem about a person fishing on a lake, the expectation is it will generate a different poem each time. Users may then label the output or answers from best to worst. Such labels are an input to the model to make sure the model is giving a more human-like or best answers, while trying to minimize the worst answers (e.g., via reinforcement learning). In some embodiments, a "prompt" as described herein includes one or more of: a request (e.g., a question or instruction (e.g., write a summary of a poem)), one or more datasets, a command or instruction, code snippets, mathematical equations, and/or one or more examples (e.g., one-shot or two-shot examples). The "prompt instructions" as included in the inputs can include any of the instructions as described herein. Once trained through the above method, different method, or variation, the trained model 222 is saved and then decomposed by the decomposition component 224.

The decomposition component 224 may use matrix decomposition to identify the nodes in a layer that provide the largest contribution the network generating an accurate answer. These nodes are described herein as the significant nodes. Nodes that are not significant may be described as insignificant. In a neural network, matrices may be used to represent the weights and biases of the nodes (also known as nodes). Potential matrices in a neural network include weight matrices, bias matrices, and activation function matrices. Weight matrices are used to do weight calculations for a layer. Weights are learned during training. Each connection between nodes in adjacent layers of a neural network has an associated weight. If there is a layer with n nodes and the next layer has m nodes, then all the weights between these two layers may be represented as an n x m matrix. Each entry in the matrix corresponds to a weight of a connection between two nodes (a node in the current layer and a node in the previous layer). In one aspect, a column of the weight matrix will correspond to the weights of a single node, which may include a different weight for each input connection to the node. Each node in a layer (except for the input layer) has an associated bias. If a layer has n nodes, the biases for that layer can be represented as an n x 1 matrix (a column vector). The activations of the nodes (i.e., their outputs) can also be represented as matrices. If a layer has n nodes, the activations can be represented as an n x 1 matrix.

When a neural network is processing input or learning from errors (during backpropagation), it performs matrix operations (like multiplication and addition) on these matrices. For example, to calculate the inputs to a layer of nodes, the network multiplies the activation matrix of the previous layer by the weight matrix and then adds the bias matrix. This result may then be passed through a non-linear function (like ReLU or sigmoid) to get the activation matrix for the current layer.

Matrix decomposition may be used to identify the nodes that provide the largest contribution to generating a high quality response to an input. These nodes are the significant nodes. Matrix decomposition, also known as matrix factorization, involves breaking down a matrix into a product of matrices. It's a useful technique in linear algebra and can simplify complex matrix operations. In aspects, Singular Value Decomposition (SVD) is used for decomposition. SVD is a generalization of the singular value decomposition to non-square matrices. Other matrix decomposition methods may be used. Preferred decomposition methods may be described as Rank-Revealing Factorization methods and may include SVD, QR factorization with column pivoting, QR Factorization with Other Pivoting Choices, UTV Decomposition, and LU Factorization.

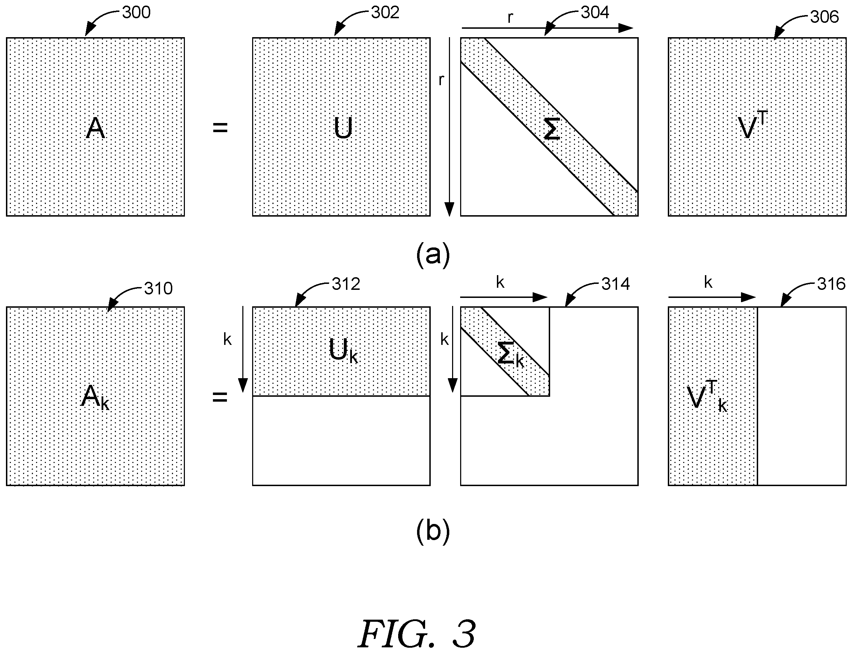

Turning now to FIG. 3, SVD decomposes a matrix A 300 into a product of three matrices: an orthogonal matrix (U) 302, a diagonal matrix of singular values ($\Sigma$) 304, and the transpose of an orthogonal matrix ($V^T$) 306. If the matrix being decomposed is A, then $A = U\Sigma V^T$. The columns of the orthogonal matrix (U) 302 in Singular Value Decomposition (SVD) are the left singular vectors of the original matrix 300. The order of the columns in U is significant because it corresponds to the order of the singular values in the $\Sigma$ matrix 304.

The first column of the orthogonal matrix (U) 302 corresponds to the largest singular value in $\Sigma$, the second column corresponds to the second largest singular value, and so on. This means that the columns of U are ordered by the amount of variance in the original data that they account for. The first column of U is the direction in the data space along which the data varies the most. In the context of Principal Component Analysis (PCA), the columns of the orthogonal matrix (U) 302 (the left singular vectors) are the principal components of the data, and the order of the columns indicates the importance of the corresponding principal component. The first few columns (principal components) typically capture most of the variation in the data. The remaining columns (principal components) capture less and less of the data's variation.

Once decomposed, a threshold amount of columns from the orthogonal matrix (U) 302 may be selected for deployment in the trusted environment. This threshold amount is represented by k in the second row of matrices shown in FIG. 3. The number of nodes k in a given layer that are deployed in the trusted environment may vary from layer to layer. For example, in a first layer 5 nodes out of 1000 may be deployed to the trusted environment. In a second layer, 10 nodes of 1000 may be deployed to the trusted environment. It is been discovered that removing nodes from different types of layers causes different results. For example, in several GPT models, removing nodes from feedforward and fully connected layers causes more degradation then removing the same amount of nodes from an attention layer. In in this context, it may be desirable to remove nodes from only feedforward and fully connected layers, while leaving the attention layers fully intact in the untrusted environment. Alternatively, it may be desirable to remove a minimal number of nodes, such as one, from attention layers simply for the purpose of security, while recognizing the impact on the model performance may not be significant.

As every model may be different and results may vary from architecture to architecture, testing the degradation caused by removing nodes from the model may be performed to select the amount of nodes k removed from each layer. In aspects, a desired degradation target can be specified, such as 50%, 70%, or 90% degradation. Degradation may be measured by model accuracy, by comparing the result generated by the degraded model with a ground truth result associated with the input. In testing of various models using GPT architectures, it has been found that removing less than 5% of nodes from a layer causes significant performance degradation. Thus, in aspects, the technology described herein may deploy 5% or less of nodes from the model in the trusted environment and 95% or more of nodes from the model in an untrusted environment. In another aspect, the technology described herein may deploy 10% or less of nodes from the model in the trusted environment and 90% or more of nodes from the model in an untrusted environment. In another aspect, the technology described herein may deploy 20% or less of nodes from the model in the trusted environment and 80% or more of nodes from the model in an untrusted environment.

There are several metrics used to measure the accuracy of a Language Learning Model or a neural network. Example metrics include accuracy, precision, recall, F1 Score, Mean Squared Error (MSE), Root Mean Squared Error (RMSE), and Area Under ROC Curve (AUC-ROC). Accuracy is a ratio of correctly predicted observation to the total observations. Precision is the ratio of correctly predicted positive observations to the total predicted positive observations. It's also called Positive Predictive Value. It is a measure of a classifier's exactness. Low precision indicates a high number of false positives. Recall is the ratio of correctly predicted positive observations to the all observations in actual class. It's also called Sensitivity, Hit Rate, or True Positive Rate. It is a measure of a classifier's completeness. Low recall indicates a high number of false negatives. F1 Score is the weighted average of Precision and Recall. Therefore, this score takes both false positives and false negatives into account. MSE is the average of the squared difference between the predicted and actual values. RMSE is the square root of MSE. A ROC Curve is a plot of true positive rate against false positive rate. It shows the tradeoff between sensitivity and specificity (any increase in sensitivity will be accompanied by a decrease in specificity). The closer the curve follows the left-hand border and then the top border of the ROC space, the more accurate the test. The closer the curve comes to the 45-degree diagonal of the ROC space, the less accurate the test. The area under the curve is a measure of test accuracy. Each of these metrics has its own strengths and weaknesses, and they give different insights about the performance of the model.

In aspects, an orthogonal matrix ($U_k$) 312, a diagonal matrix of singular values ($\Sigma_k$) 314, and the transpose of an orthogonal matrix ($V^T_k$) 316 are deployed to the trusted environment and used to perform operations against a matrix output from a previous layer. These three matrices correspond to nodes in the neural network layer. Though not shown, the data from the matrices not included in the k matrices may form a third set of matrices that are deployed to the untrusted environment. In aspects, the third set of matrices are recombined into a single matrix when deployed to the untrusted environment. As mentioned k may be selected achieve a threshold performance degradation. In aspect, the threshold degradation may be 10% or more, 20% or more, 30% or more, 50% or more, or 70% or more. The threshold degradation may be measured after removing nodes from one or more layers.

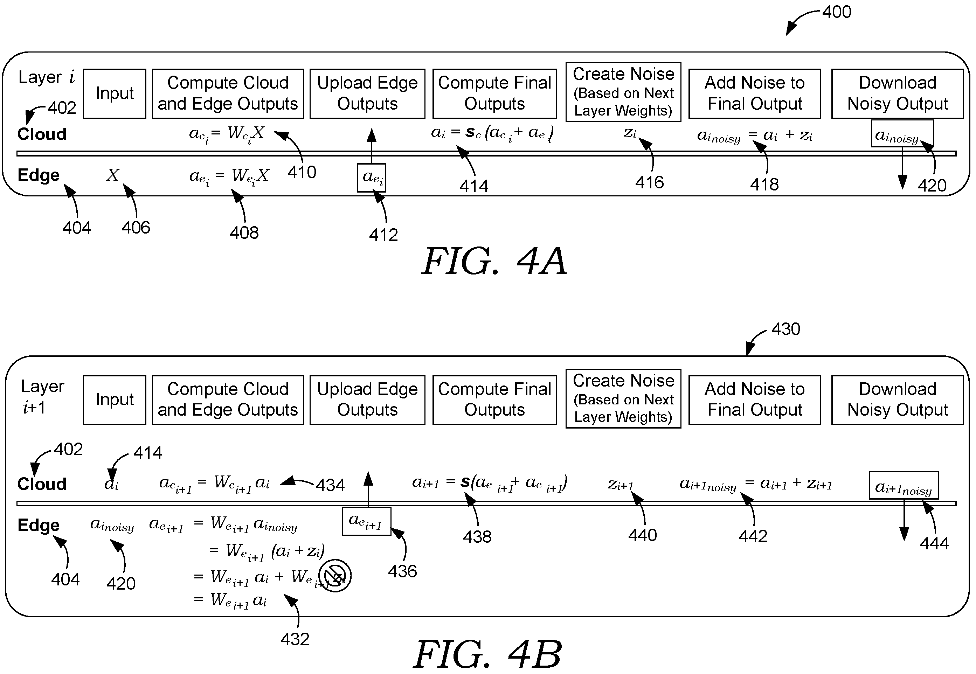

Turning now to FIG. 4A, in combination with FIG. 2, example operations of partial client neural network 103a and partial server neural network 232 are illustrated according to aspects of the technology described herein. In FIG. 4A, user device 102a is described as edge device 404 and production server 106 is described as the cloud 402. The operations of a first hybrid layer 400 are described. The first hybrid layer is also described as the $i$-th layer. As described previously, the cloud 402 is an example of a trusted device and the edge device 404 is an example of an untrusted device.

Let $W_i$ be the weight matrix of some (generic) i-th linear layer. Ahead of any inference, $W_i$ is split as $W_i = W_{ci} + W_{ei}$, where $W_{ci}$ is kept as the "secret" on the cloud and $W_e$ is stored on the edge device. The decomposition of $W_i$ can be performed, for example, by the previously explained SVD decomposition, but alternatively using other decomposition methods. In the following example, the SVD decomposition is used, such that $W_{ci}$ is given by the first $k \ll \text{rank}(W_i)$ singular vectors (of $W_i$), and $W_{ei}$ the rest. As mentioned, $k$ may be different for different layers. $W_{ci}$ may be described as the significant nodes. $W_{ei}$ may be described as the insignificant nodes.

Focusing on the $i$-th layer, firstly the edge device sends $x_i$ as the input 406 from the previous layer to the clouds and the edge computes a partial edge answer 412 for the first layer using the expression $a_{ei} = (W_{ei})x_i$ 408 while, in parallel, the cloud computes a cloud answer for the first layer using the expression $a_{ci} = (W_{ci})x_i$ 410. The vector $a_{ei}$ is the partial edge answer 412 and may be generated by completing a linear operation, such as multiplying the input 406 by a matrix representing weights of the insignificant nodes operating on the edge device 404. The vector $a_{ci}$ is the result of linear operations, such as multiplying the input 406 by a matrix representing weights of the significant nodes operating on the cloud 402.

Secondly, the edge device sends the partial client answer 412 $a_{ei}$ to the cloud, which then applies the activation function $\sigma$ on the sum of both the partial edge answer 412 and partial cloud answer as follows, $a_i = \sigma(a_{ci} + a_{ei})$ 414. Note that, $\sigma(a_{ci} + a_{ei}) = \sigma((W_{ci} + W_{ei})x_i) = \sigma(W_i x_i)$, which is the full "true" activation output, the one that would be obtained in any regular one-party setting (edge or cloud only).

Next, the noise generator 233 creates the noisy vector $z_i$ 416, and calculates $a_{inoisy} = a_i + z_i$ 418. In the example shown, the noise generator 233 computes a random mask matrix $R_i$, and a noise vector $z_i$ (note that $R_i = 0$ is the zero matrix in the case where mask is not added). In order to minimize any additional mathematical operations as well as enabling the feasibility of the method, as will be shown later, the noise vector $z_i$ 416 may be chosen as:

$$z_i = \sum_{j=1}^{k} \alpha_j v_j$$

where $\alpha_1, \ldots, \alpha_k$ are randomly generated scalars, and $v_1, \ldots, v_k$ are the $k$ nonzero columns of $W_{ci+1}$. In this way, $z_i$ 416 is orthogonal to $W_{ei+1}$, which allows the noise to be accounted for during subsequent layer operations performed on the edge device 404. Essentially, the noise is selected in a way that it does not change the result that would otherwise be obtained from downstream operations. At this stage, $a_{\text{inoisy}}$ 420 will be sent to the edge as the merged activation output, which serves as the input to the next layer (namely $i$ + 1-th layer). Meanwhile, $a_i$ is known to the cloud and so can serve as its input to this second hybrid layer 430.

In addition to the example above, other methods of adding noise are possible. If other methods are used, they should have several of the same characteristics as the method described above. These characteristics include generating the noise in a secure environment, such as the environment hosting the partial server-side neural network so that the method of noise generation is obscured from the edge/client device hosting the partial client side neural network. Additionally, the noise generated should be of sufficient dimension and amplitude to effectively act as noise and confuse the result matrix. Finally, the noise should be generated in a way that it is cancelled in a subsequent step to avoid degrading model performance.

Turning now to FIG. 4B, in combination with FIG. 2, the operations of partial client neural network 103a and partial server neural network 232 are illustrated according to aspects of the technology described herein. In FIG. 4B, user device 102a is described as edge device 404 and production server 106 is described as the cloud 402. The operations of a second hybrid layer 430 are described. The second hybrid layer 430 is also described as the $i$ + 1 layer.

Again, at the next layer, the $i$ + 1-th layer 430, the cloud computes a cloud answer for the second layer using the expression, $a_{ci+1} = (W_{ci+1}) a_i$ 434, while the edge computes an edge answer $a_{ei+1}$ 436 for the first layer using the expression 432 with a similar operation, but using $a_{\text{inoisy}}$ 420 this time, different from the previous layer,

$$a_{ei+1} = (W_{ei+1} - R_{i+1}) \, a_{\text{inoisy}}$$

$$= W_{ei+1} \, (a_i + z_i) - R_{i+1} \, a_{\text{inoisy}}$$

$$= W_{ei+1ai} + W_{ei+1zi} - R_{i+1} \, a_{\text{inoisy}}$$

$$= W_{ei+1} \, a_i - R_{i+1} \, a_{\text{inoisy}}$$

where the last line follows that $W_{ei+1}$ and $z_i$ are orthogonal. As can be seen, the partial edge answer for the second layer 436 $a_{ei+1}$ is the "true" non-noisy output of the edge layer, excluding the term $R_{i+1}a_{\text{inoisy}}$. This noise removal example is appropriate for the noise method chosen. Other noise removal methods may be used to match the chosen noise generation method.

Now, as in the previous layer, the edge device sends the vector $a_{ei+1}$ 436 to the cloud, which applies the activation function $\sigma$ on the sum of both terms as follows,

$$a_{i+1} = \sigma \, (a_{ci+1} + a_{ei+1} - R_{i+1}a_{\text{inoisy}} + R_{i+1}a_{\text{inoisy}}).$$

Note that, $\sigma \, (a_{ci+1} + a_{ei+1} - R_{i+1}a_{\text{inoisy}} + R_{i+1}a_{\text{inoisy}}) = \sigma \, (W_{ci+1} + W_{ei+1}) \, x_i) = \sigma \, (W_{i+1}x_{i+1})$, which is the full "true" activation output of the $i$ + 1-th layer - again, the one that should result in regular one-party settings. Next, as in the previous layer, the cloud creates and adds a new noisy vector $z_{i+1}$, to obtain $a_{i+1\text{noisy}} = a_{i+1} + z_{i+1}$. Now, at layer i+1, the cloud send the output $a_{i+1\text{noisy}}$ to the edge, and the process continues in the same manner.

EXAMPLE METHODS

Now referring to FIGS. 5, 6 and 7, each block of methods 500, 600, and 700, described herein, comprises a computing process that may be performed using any combination of hardware, firmware, and/or software. For instance, various functions may be carried out by a processor executing instructions stored in memory. The methods may also be embodied as computer-usable instructions stored on computer storage media. The method may be provided by an operating system. In addition, methods 500, 600, and 700 are described, by way of example, with respect to FIGS. 1-4. However, these methods may additionally or alternatively be executed by any one system, or any combination of systems, including, but not limited to, those described herein.

FIG. 5 is a flow diagram showing a method 500 of operating a hybrid neural network, in accordance with some embodiments of the present disclosure. Method 500 may be performed on or with systems similar to those described with reference to FIGS. 1-4.

At step 510, the method 500 includes receiving, at a partial server-side neural network, a client-side output for a first layer generated based on a layer input. The client-side output is generated by a partial client-side neural network that includes less than 100% of all nodes associated with the first layer. The client-side output may have been generated from a layer input, such as a generative prompt or from the output of a previous layer in the neural network. The output from the previous layer may have been generated by the partial server-side neural network.

In aspects, the client-side layer and the server-side layers may be partial layers with all functions of an individual node on either the server side or the client side. However, less than all of the layer's nodes are located on either the server side or client side, but a first portion are on the client side and a second portion on the server side. Results from the first portion and second portion are combined to generate a layer output.

At step 520, the method 500 includes receiving, at the partial server-side neural network, the layer input. As mentioned, the layer input could originate on the client side with a user input, such as a prompt. In this scenario, the layer input may be communicated from the client-side to the server side. In another aspect, the layer input is from a previous layer and may have been generated by the partial server-side network. In this scenario, the layer input is received at a current layer of the partial server-side neural network from a previous layer of the partial server-side neural network.

At step 530, the method 500 includes generating, at the partial server-side neural network, a server-side output for the first layer generated based on the layer input. The server-side output is generated by the partial server-side neural network that includes less than 20% of all nodes associated with the first layer. The output can take different forms depending on the nature of the layer.

At step 540, the method 500 includes generating, at the partial server-side neural network, a final output for the first layer using the server-side output and the client-side output as input. The final output may include noise added at the server side. At step 550, the method 500 includes communicating the final output to the partial client-side neural network. The partial-side neural network may then process the final output in a subsequent layer. This process may repeat with partial results being generated on the client-side layer and passed to the sever-side layer and final results generated on the sever-side layer and passed back to the next layer on the client side until a final result is generated.

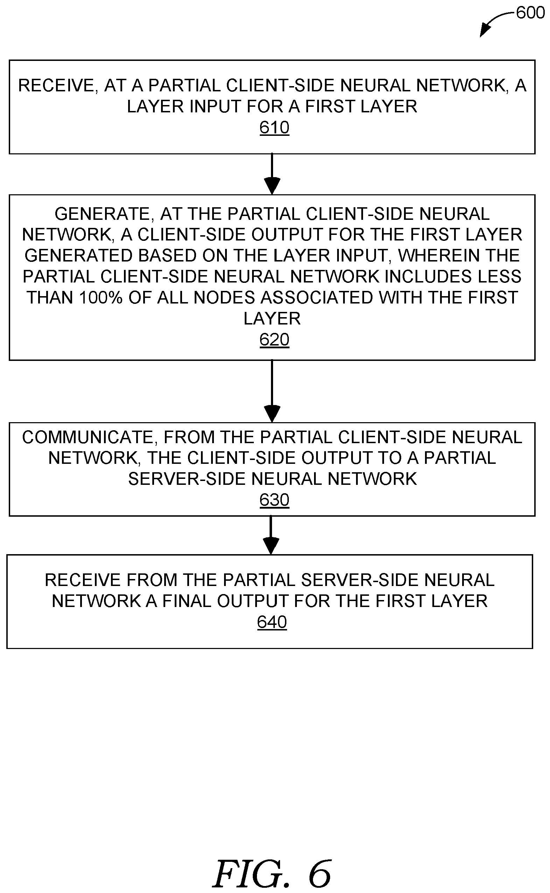

FIG. 6 is a flow diagram showing a method 600 of operating a hybrid neural network, in accordance with some embodiments of the present disclosure. Method 600 may be performed on or with systems similar to those described with reference to FIGS. 1-4.

At step 610, the method 600 includes receiving, at a partial client-side neural network, a layer input for a first layer. The layer input, such as a generative prompt, may be provided to the client-side neural network by a user. Alternatively, the layer input may be from the output of a previous layer in the neural network. The output from the previous layer may have been generated by the partial server-side neural network.

At step 620, the method 600 includes generating, at the partial client-side neural network, a client-side output for the first layer generated based on the layer input. The partial client-side neural network includes less than 100% of all nodes associated with the first layer. However, every aspect of an individual node may reside on the client side.

At step 630, the method 600 includes communicating, from the partial client-side neural network, the client-side output to a partial server-side neural network. At step 640, the method 600 includes receiving from the partial server-side neural network a final output for the first layer.

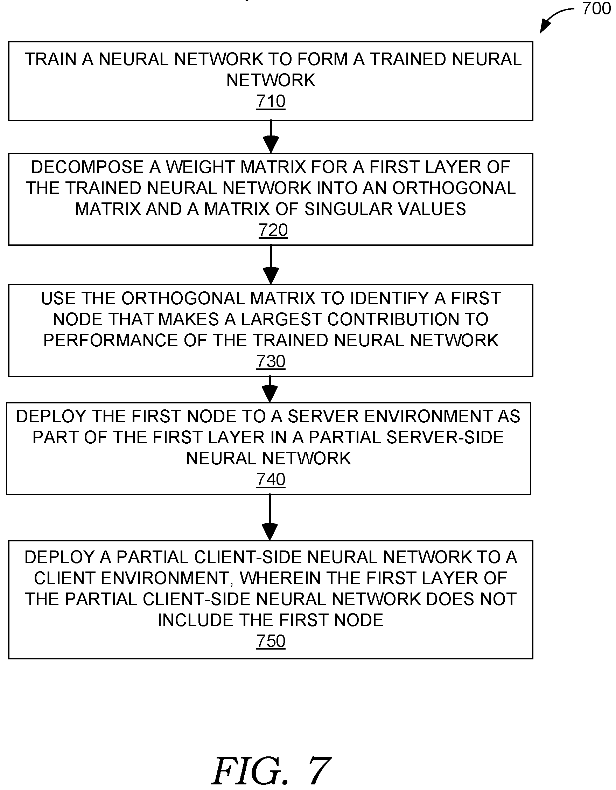

FIG. 7 is a flow diagram showing a method 700 of operating a hybrid neural network, in accordance with some embodiments of the present disclosure. Method 700 may be performed on or with systems similar to those described with reference to FIGS. 1-4.

At step 710, the method 700 includes training a neural network to form a trained neural network. The neural network may take different forms with a few examples including, GOOGLE's BERT and OpenAI's GPT-2 and GPT-3. GPT-3, and GPT-4.

At step 720, the method 700 includes decomposing a weight matrix for a first layer of the trained neural network into an orthogonal matrix and a matrix of singular values. Matrix decomposition may be used to identify the nodes that provide the largest contribution to generating a high quality response to an input. These nodes are the significant nodes. Matrix decomposition, also known as matrix factorization, involves breaking down a matrix into a product of matrices. It's a useful technique in linear algebra and can simplify complex matrix operations. In aspects, Singular Value Decomposition (SVD) is used for decomposition. SVD is a generalization of the singular value decomposition to non-square matrices. Other matrix decomposition methods may be used. Preferred decomposition methods may be described as Rank-Revealing Factorization methods and may include SVD, QR factorization with column pivoting, QR Factorization with Other Pivoting Choices, UTV Decomposition, and LU Factorization. At step 730, the method 700 includes using the orthogonal matrix to identify a first node that makes a largest contribution to performance of the trained neural network.

At step 740, the method 700 includes deploying the first node to a server environment as part of the first layer in a partial server-side neural network. At step 750, the method 700 includes deploying a partial client-side neural network to a client environment, wherein the first layer of the partial client-side neural network does not include the first node.

**Example Operating Environment**

Referring to the drawings in general, and initially to FIG. 8 in particular, an example operating environment for implementing aspects of the technology described herein is shown and designated generally as computing device 800. Computing device 800 is but one example of a suitable computing environment and is not intended to suggest any limitation as to the scope of use of the technology described herein. Neither should the computing device 800 be interpreted as having any dependency or requirement relating to any one or combination of components illustrated.

The technology described herein may be described in the general context of computer code or machine-useable instructions, including computer-executable instructions such as program components, being executed by a computer or other machine, such as a personal data assistant or other handheld device. Generally, program components, including routines, programs, objects, components, data structures, and the like, refer to code that performs particular tasks or implements particular abstract data types. The technology described herein may be practiced in a variety of system configurations, including handheld devices, consumer electronics, general-purpose computers, specialty computing devices, etc. Aspects of the technology described herein may also be practiced in distributed computing environments where tasks are performed by remote-processing devices that are linked through a communications network.

With continued reference to FIG. 8, computing device 800 includes a bus 810 that directly or indirectly couples the following devices: memory 812, one or more processors 814, one or more presentation components 816, input/output (I/O) ports 818, I/O components 820, and an illustrative power supply 822. Bus 810 represents what may be one or more busses (such as an address bus, data bus, or a combination thereof). Although the various blocks of FIG. 8 are shown with lines for the sake of clarity, in reality, delineating various components is not so clear, and metaphorically, the lines would more accurately be grey and fuzzy. For example, one may consider a presentation component such as a display device to be an I/O component. Also, processors have memory. The inventors hereof recognize that such is the nature of the art and reiterate that the diagram of FIG. 8 is merely illustrative of a computing device that may be used in connection with one or more aspects of the technology described herein. Distinction is not made between such categories as "workstation," "server," "laptop," "handheld device," etc., as all are contemplated within the scope of FIG. 8 and refer to "computer" or "computing device."

Computing device 800 typically includes a variety of computer-readable media. Computer-readable media may be any available media that may be accessed by computing device 800 and includes both volatile and nonvolatile, removable and non-removable media. By way of example, and not limitation, computer-readable media may comprise computer storage media and communication media. Computer storage media includes both volatile and nonvolatile, removable and non-removable media implemented in any method or technology for storage of information such as computer-readable instructions, data structures, program modules, or other data.

Computer storage media includes RAM, ROM, EEPROM, flash memory or other memory technology, CD-ROM, digital versatile disks (DVD) or other optical disk storage, magnetic cassettes, magnetic tape, magnetic disk storage or other magnetic storage devices. Computer storage media does not comprise a propagated data signal.

Communication media typically embodies computer-readable instructions, data structures, program modules, or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared, and other wireless media. Combinations of any of the above should also be included within the scope of computer-readable media.

Memory 812 includes computer storage media in the form of volatile and/or nonvolatile memory. The memory 812 may be removable, non-removable, or a combination thereof. Example memory includes solid-state memory, hard drives, optical-disc drives, etc. Computing device 800 includes one or more processors 814 that read data from various entities such as bus 810, memory 812, or I/O components 820. Presentation component(s) 816 present data indications to a user or other device. Example presentation components 816 include a display device, speaker, printing component, vibrating component, etc. I/O ports 818 allow computing device 800 to be logically coupled to other devices, including I/O components 820, some of which may be built in.

Illustrative I/O components include a microphone, joystick, game pad, satellite dish, scanner, printer, display device, wireless device, a controller (such as a stylus, a keyboard, and a mouse), a natural user interface (NUI), and the like. In aspects, a pen digitizer (not shown) and accompanying input instrument (also not shown but which may include, by way of example only, a pen or a stylus) are provided in order to digitally capture freehand user input. The connection between the pen digitizer and processor(s) 814 may be direct or via a coupling utilizing a serial port, parallel port, and/or other interface and/or system bus known in the art. Furthermore, the digitizer input component may be a component separated from an output component such as a display device, or in some aspects, the usable input area of a digitizer may coexist with the display area of a display device, be integrated with the display device, or may exist as a separate device overlaying or otherwise appended to a display device. Any and all such variations, and any combination thereof, are contemplated to be within the scope of aspects of the technology described herein.

An NUI processes air gestures, voice, or other physiological inputs generated by a user. Appropriate NUI inputs may be interpreted as ink strokes for presentation in association with the computing device 800. These requests may be transmitted to the appropriate network element for further processing. An NUI implements any combination of speech recognition, touch and stylus recognition, facial recognition, biometric recognition, gesture recognition both on screen and adjacent to the screen, air gestures, head and eye tracking, and touch recognition associated with displays on the computing device 800. The computing device 800 may be equipped with depth cameras, such as stereoscopic camera systems, infrared camera systems, RGB camera systems, and combinations of these, for gesture detection and recognition. Additionally, the computing device 800 may be equipped with accelerometers or gyroscopes that enable detection of motion. The output of the accelerometers or gyroscopes may be provided to the display of the computing device 800 to render immersive augmented reality or virtual reality.

A computing device may include a radio 824. The radio 824 transmits and receives radio communications. The computing device may be a wireless terminal adapted to receive communications and media over various wireless networks. Computing device 800 may communicate via wireless policies, such as code division multiple access ("CDMA"), global system for mobiles ("GSM"), or time division multiple access ("TDMA"), as well as others, to communicate with other devices. The radio communications may be a short-range connection, a long-range connection, or a combination of both a short-range and a long-range wireless telecommunications connection. When we refer to "short" and "long" types of connections, we do not mean to refer to the spatial relation between two devices. Instead, we are generally referring to short range and long range as different categories, or types, of connections (i.e., a primary connection and a secondary connection). A short-range connection may include a Wi-Fi® connection to a device (e.g., mobile hotspot) that provides access to a wireless communications network, such as a WLAN connection using the 802.11 protocol. A Bluetooth connection to another computing device is a second example of a short-range connection. A long-range connection may include a connection using one or more of CDMA, GPRS, GSM, TDMA, and 802.16 policies.

## EMBODIMENTS

Clause A: One or more computer storage media comprising computer-executable instructions that when executed by computing device performs a method of operating a neural network in hybrid deployment, the method comprising: receiving, at a partial server-side neural network, a client-side output for a first layer generated based on a layer input, wherein the client-side output is generated by a partial client-side neural network that includes less than 100% of all nodes associated with the first layer; receiving, at the partial server-side neural network, the layer input; generating, at the partial server-side neural network, a server-side output for the first layer generated based on the layer input, wherein the server-side output is generated by the partial server-side neural network that includes less than 20% of all nodes associated with the first layer; generating, at the partial server-side neural network, a final output for the first layer using the server-side output and the client-side output as input; and communicating the final output to the partial client-side neural network.

Clause B: The media of Clause A, wherein the method further comprises adding noise to the final output before communicating the final output to the partial client-side neural network.

Clause C: The media of Clause B, wherein the noise is based on a weight matrix for a subsequent layer in the partial client-side neural network.

Clause D: The media of Clause A, wherein the generating the final output for the first layer comprises summing the server-side output and the client-side output to generate a combined linear output that used to generate the final output.

Clause E: The media of Clause D, wherein the generating the final output for the first layer comprises providing the combined linear output to an activation function to produce the final output.

Clause F: The media of Clause A, wherein the less than 20% of all nodes associated with the first layer are identified by decomposing a weight matrix for the first layer into an orthogonal matrix and a matrix of singular values and identifying significant nodes.

Clause G: The media of Clause F, wherein the less than 20% of all nodes associated with the first layer are classified as significant because removing the less than 20% of all nodes from the first layer decreases a neural network accuracy metric by more than a threshold amount.

Clause H: The media of Clause F, where the decomposing of the weight matrix is performed using a Singular Value Decomposition.

Clause I: A method of operating a neural network in hybrid deployment comprising: receiving, at a partial client-side neural network, a layer input for a first layer; generating, at the partial client-side neural network, a client-side output for the first layer generated based on the layer input, wherein the partial client-side neural network includes less than 100% of all nodes associated with the first layer; communicating, from the partial client-side neural network, the client-side output to a partial server-side neural network; and receiving from the partial server-side neural network a final output for the first layer.

Clause J: The method of Clause I, wherein the final output includes noise added by the partial server-side neural network.

Clause K: The method of Clause J, wherein the noise is based on a weight matrix for a subsequent layer in the partial client-side neural network.

Clause L: The method of Clause I, wherein the less than 100% of all nodes associated with the first layer are identified by decomposing a weight matrix for the first layer into an orthogonal matrix and a matrix of singular values and identifying significant nodes.

Clause M: The method of Clause L, where the decomposing of the weight matrix is performed using a Singular Value Decomposition.

Clause N: The method of Clause I, wherein the neural network is a large language model.

Clause O: The method of Clause N, wherein the partial server-side neural network includes less than 20% of all nodes associated with the first layer.

Clause P: A method of operating a neural network in hybrid deployment, comprising: training a neural network to form a train neural network; decomposing a weight matrix for a first layer of the trained neural network into an orthogonal matrix and a matrix of singular values; using the orthogonal matrix to identify a first node that makes a largest contribution to performance of the trained neural network; deploying the first node to a server environment as part of the first layer in a partial server-side neural network; and deploying a partial client-side neural network to a client environment, wherein the first layer of the partial client-side neural network does not include the first node.

Clause Q: The method of Clause P, where the decomposing of the weight matrix is performed using Singular Value Decomposition.

Clause R: The method of Clause P, wherein the partial server-side neural network includes less than 20% of all nodes associated with the first layer.

Clause S: The method of Clause R, wherein the less than 20% of all nodes associated with the first layer are deployed to the server environment because removing the less than 20% of all nodes from the first layer decreases a neural network accuracy metric by more than a threshold amount.

Clause T: The method of Clause Q, wherein the neural network is a large language model.

The technology described herein is related to a hybrid neural network that divides operations of a neural network layer between a trusted environment and an untrusted environment. In an aspect, a first portion of nodes (or neurons) in a layer operate on a trusted device and a second portion of nodes in the layer operate on the untrusted device. The layer output is generated by combining the result produced by the nodes in the trusted and untrusted environments. The technology described herein decomposes a pretrained neural network by identifying a small amount (relative to total nodes in the layer) of nodes in a layer that provide the largest contribution to an accurate model result. The technology described herein may use a matrix decomposition technique to identify components (e.g., singular values and singular vectors) that are able to reproduce the original matrix, but vary in the importance of information they hold.

The technology described herein has been described in relation to particular aspects, which are intended in all respects to be illustrative rather than restrictive. While the technology described herein is susceptible to various modifications and alternative constructions, certain illustrated aspects thereof are shown in the drawings and have been described above in detail. It should be understood, however, that there is no intention to limit the technology described herein to the specific forms disclosed, but on the contrary, the intention is to cover all modifications, alternative constructions, and equivalents falling within the spirit and scope of the technology described herein.

**Claims**

1. One or more computer storage media comprising computer-executable instructions that when executed by computing device performs a method 500 of operating a neural network in hybrid deployment, the method comprising:

   receiving (510), at a partial server-side neural network, a client-side output for a first layer generated based on a layer input, wherein the client-side output is generated by a partial client-side neural network that includes less than 100% of all nodes associated with the first layer;
   receiving (520), at the partial server-side neural network, the layer input;
   generating (530), at the partial server-side neural network, a server-side output for the first layer generated based on the layer input, wherein the server-side output is generated by the partial server-side neural network that includes less than 20% of all nodes associated with the first layer;
   generating (540), at the partial server-side neural network, a final output for the first layer using the server-side output and the client-side output as input; and
   communicating (550) the final output to the partial client-side neural network.

**2.** The media of claim 1, wherein the method further comprises adding noise to the final output before communicating the final output to the partial client-side neural network.

**3.** The media of claim 2, wherein the noise is based on a weight matrix for a subsequent layer in the partial client-side neural network.

**4.** The media of claim 1, wherein the generating the final output for the first layer comprises summing the server-side output and the client-side output to generate a combined linear output that used to generate the final output.

**5.** The media of claim 4, wherein the generating the final output for the first layer comprises providing the combined linear output to an activation function to produce the final output.

**6.** The media of claim 1, wherein the less than 20% of all nodes associated with the first layer are identified by decomposing a weight matrix for the first layer into an orthogonal matrix and a matrix of singular values and identifying significant nodes.

**7.** The media of claim 6, wherein the less than 20% of all nodes associated with the first layer are classified as significant because removing the less than 20% of all nodes from the first layer decreases a neural network accuracy metric by more than a threshold amount.

**8.** The media of claim 6, where the decomposing of the weight matrix is performed using a Singular Value Decomposition.

**9.** A method (600) of operating a neural network in hybrid deployment comprising:

receiving (610), at a partial client-side neural network, a layer input for a first layer;
generating (620), at the partial client-side neural network, a client-side output for the first layer generated based on the layer input, wherein the partial client-side neural network includes less than 100% of all nodes associated with the first layer;
communicating (630), from the partial client-side neural network, the client-side output to a partial server-side neural network; and
receiving (640) from the partial server-side neural network a final output for the first layer.

**10.** The method of claim 9, wherein the final output includes noise added by the partial server-side neural network.

**11.** The method of claim 10, wherein the noise is based on a weight matrix for a subsequent layer in the partial client-side neural network.

**12.** The method of claim 9, wherein the less than 100% of all nodes associated with the first layer are identified by decomposing a weight matrix for the first layer into an orthogonal matrix and a matrix of singular values and identifying significant nodes.

**13.** The method of claim 12, where the decomposing of the weight matrix is performed using a Singular Value Decomposition.

**14.** The method of claim 9, wherein the neural network is a large language model.

**15.** The method of claim 9, wherein the partial server-side neural network includes less than 20% of all nodes associated with the first layer.

FIG. 1

200

TRAINING SERVER 108

MODEL TRAINER
220

TRAINED MODEL
222

MODEL
DECOMPOSITION
224

USER DEVICE 102a

LAYER I/O
ROUTING
210

PARTIAL CLIENT
MODEL
103a

INPUT
240

PRODUCTION
SERVER 106

NOISE
GENERATOR
233

PARTIAL
SERVER MODEL
232

LAYER ROUTING
236

*FIG. 2*

# FIG. 3

(a)

$$A = U \quad M \quad V^T$$

300     302     304     306

(b)

$$A_k = U_k \quad M_k \quad V^T_k$$

310     312     314     316

**FIG. 4A**

*Layer i* — 402

**Edge** — 404

| Input | Compute Cloud and Edge Outputs | Upload Edge Outputs | Compute Final Outputs | Create Noise (Based on Next Layer Weights) | Add Noise to Final Output | Download Noisy Output |

- 406: $X$
- 408: $a_{e_i} = W_{e_i} X$
- 410: $a_{c_i} = W_{c_i} X$
- 412: $a_{e_i}$
- 414: $a_i = s_c(a_{c_i} + a_{e_i})$
- 416: $z_i$
- 418: $a_{i\,noisy} = a_i + z_i$
- 420: $a_{i\,noisy}$

**Cloud** — 402

400

**FIG. 4B**

*Layer i+1* — 402

**Edge** — 404

| Input | Compute Cloud and Edge Outputs | Upload Edge Outputs | Compute Final Outputs | Create Noise (Based on Next Layer Weights) | Add Noise to Final Output | Download Noisy Output |

- 420: $a_{i\,noisy}$

**Cloud** — 414

- 434: $a_{c_{i+1}} = W_{c_{i+1}} a_i$
- 432:
$$a_{e_{i+1}} = W_{e_{i+1}} a_{i\,noisy}$$
$$= W_{e_{i+1}} a_i$$
$$= W_{e_{i+1}} (a_i + z_i)$$
$$= W_{e_{i+1}} a_i + W_{e_{i+1}} z_i$$
$$= W_{e_{i+1}} a_i$$

- 436: $a_{e_{i+1}}$
- 438: $a_{i+1} = s(a_{e_{i+1}} + a_{c_{i+1}})$
- 440: $z_{i+1}$
- 442: $a_{i+1\,noisy} = a_{i+1} + z_{i+1}$
- 444: $a_{i+1\,noisy}$

430

19

500

RECEIVE, AT A PARTIAL SERVER-SIDE NEURAL NETWORK, A CLIENT-SIDE OUTPUT FOR A FIRST LAYER GENERATED BASED ON A LAYER INPUT, WHEREIN THE CLIENT-SIDE OUTPUT IS GENERATED BY A PARTIAL CLIENT-SIDE NEURAL NETWORK THAT INCLUDES LESS THAN 100% OF ALL NODES ASSOCIATED WITH THE FIRST LAYER
510

RECEIVE, AT THE PARTIAL SERVER-SIDE NEURAL NETWORK, THE LAYER INPUT
520

GENERATE, AT THE PARTIAL SERVER-SIDE NEURAL NETWORK, A SERVER-SIDE OUTPUT FOR THE FIRST LAYER GENERATED BASED ON THE LAYER INPUT, WHEREIN THE SERVER-SIDE OUTPUT IS GENERATED BY THE PARTIAL SERVER-SIDE NEURAL NETWORK THAT INCLUDES LESS THAN 20% OF ALL NODES ASSOCIATED WITH THE FIRST LAYER
530

GENERATE, AT THE PARTIAL SERVER-SIDE NEURAL NETWORK, A FINAL OUTPUT FOR THE FIRST LAYER USING THE SERVER-SIDE OUTPUT AND THE CLIENT-SIDE OUTPUT AS INPUT
540

COMMUNICATE THE FINAL OUTPUT TO THE PARTIAL CLIENT-SIDE NEURAL NETWORK
550

*FIG. 5*

600

RECEIVE, AT A PARTIAL CLIENT-SIDE NEURAL NETWORK, A
LAYER INPUT FOR A FIRST LAYER
610

GENERATE, AT THE PARTIAL CLIENT-SIDE NEURAL
NETWORK, A CLIENT-SIDE OUTPUT FOR THE FIRST LAYER
GENERATED BASED ON THE LAYER INPUT, WHEREIN THE
PARTIAL CLIENT-SIDE NEURAL NETWORK INCLUDES LESS
THAN 100% OF ALL NODES ASSOCIATED WITH THE FIRST
LAYER
620

COMMUNICATE, FROM THE PARTIAL CLIENT-SIDE NEURAL
NETWORK, THE CLIENT-SIDE OUTPUT TO A PARTIAL
SERVER-SIDE NEURAL NETWORK
630

RECEIVE FROM THE PARTIAL SERVER-SIDE NEURAL
NETWORK A FINAL OUTPUT FOR THE FIRST LAYER
640

*FIG. 6*

700

TRAIN A NEURAL NETWORK TO FORM A TRAINED NEURAL
NETWORK
710

DECOMPOSE A WEIGHT MATRIX FOR A FIRST LAYER OF
THE TRAINED NEURAL NETWORK INTO AN ORTHOGONAL
MATRIX AND A MATRIX OF SINGULAR VALUES
720

USE THE ORTHOGONAL MATRIX TO IDENTIFY A FIRST
NODE THAT MAKES A LARGEST CONTRIBUTION TO
PERFORMANCE OF THE TRAINED NEURAL NETWORK
730

DEPLOY THE FIRST NODE TO A SERVER ENVIRONMENT AS
PART OF THE FIRST LAYER IN A PARTIAL SERVER-SIDE
NEURAL NETWORK
740

DEPLOY A PARTIAL CLIENT-SIDE NEURAL NETWORK TO A
CLIENT ENVIRONMENT, WHEREIN THE FIRST LAYER OF
THE PARTIAL CLIENT-SIDE NEURAL NETWORK DOES NOT
INCLUDE THE FIRST NODE
750

*FIG. 7*

800

MEMORY

812

PROCESSOR(S)

814

PRESENTATION
COMPONENT(S)

816

RADIO(S)

824

I/O PORT(S)

818

I/O COMPONENTS

820

POWER SUPPLY

822

810

*FIG. 8*